# EUROPÄISCHE PATENTSCHRIFT

(11) **EP 2 702 915 B1**
(45) Veröffentlichungstag und Bekanntmachung des Hinweises auf die Patenterteilung: **26.05.2021**
(21) Anmeldenummer: 13182547.3
(22) Anmeldetag: 02.09.2013
(51) Int. Cl.: A47L 9/00

(54) **Selbsttätig verfahrbares Bodenstaub-Aufsammelgerät und Laufrad, insbesondere für ein Bodenstaub-Aufsammelgerät**
Automatically moveable floor dust collecting device and impeller wheel, in particular for a floor dust collecting device
Appareil de collecte de la poussière du sol à déplacement automatique et roue mobile, notamment pour un appareil de collecte de la poussière du sol

(30) Priorität: 04.09.2012 DE 102012108189
(43) Veröffentlichungstag der Anmeldung: 05.03.2014
(73) Patentinhaber: Vorwerk & Co. Interholding GmbH, 42275 Wuppertal (DE)
(72) Erfinder: Windorfer, Harald, 40822 Mettmann (DE)
(74) Vertreter: Müller, Enno

(56) Entgegenhaltungen:
- DE-U1-202005 019 993
- JP-U- S5 075 901
- JP-Y1- S4 614 242

## Beschreibung

Die Erfindung betrifft zunächst ein selbsttätig verfahrbares Bodenstaub-Aufsammelgerät mit mindestens einem angetriebenen Laufrad, wobei das Laufrad eine Drehachse, eine Nabe und einen eine Reifenaufstandsfläche ausbildenden Reifen aufweist.

Die Erfindung betrifft im Weiteren ein Laufrad, das eine Drehachse, eine Nabe und einen eine Reifenaufstandsfläche ausbildenden Reifen aufweist.

Derartige selbsttätig verfahrbare Bodenstaub-Aufsammelgeräte bzw. Laufräder sind bereits in vielfacher Hinsicht bekannt geworden. Es wird beispielsweise auf die DE 10 2008 009 617 A1 und die US 6,633,150 B1 verwiesen.

Auch die Veröffentlichung DE 20 2005 019 993 U1 zeigt ein selbsttätig verfahrbares Bodenstaub-Aufsammelgerät mit mindestens einem Laufrad, welches eine Drehachse, eine Nabe und einen eine Reifenaufstandsfläche ausbildenden Reifen aufweist. Aus den Veröffentlichungen JP-S- 24614242 Y1 und JP-S-5075901 U2 sind des Weiteren Laufräder bekannt, welche eine Reifenaufstandsfläche mit Profilblöcken aufweisen, welche in Umfangsrichtung hintereinander liegen und zugleich einen Teil einer Seitenfläche der Reifenaufstandsfläche bilden.

Die Erfindung beschäftigt sich mit der Aufgabenstellung, ein selbsttätig verfahrbares Bodenstaub-Aufsammelgerät bzw. ein Laufrad anzugeben, bei welchem insbesondere im Hinblick auf eine Überwindung von Hindernissen eine günstige Gestaltung gefunden ist.

Eine mögliche Lösung der Aufgabe ist nach einem ersten Erfindungsgedanken bei einem selbsttätig verfahrbaren Bodenstaub-Aufsammelgerät gegeben, bei welchem die Reifenaufstandsfläche (5) nach radial innen in zwei gegenüberliegende Seitenflächen (8) übergeht und der aus elastischem Material bestehende Reifen (4) jeweils einen Teil der Reifenaufstandsfläche (5) bildende Profilblöcke (9) aufweist, die in Umfangsrichtung (U) hintereinander vorgesehen sind, wobei der durch einen Profilblock (9) gebildete Teil der Reifenaufstandsfläche (5) im Querschnitt ein zur Mitte (M) hin abfallendes Profil (P) aufweist, wobei dieser Profilblock (9) zugleich einen Teil einer zugeordneten Seitenfläche (8) bildet und an diesem Übergang radial und in Richtung der Drehachse (7) einen am weitesten vorstehenden Bereich der Reifenaufstandsfläche (5) des Reifens (4) bildet., wobei der Profilblock (9) in eine Stufenfläche übergeht, und wobei bezogen auf eine radiale Richtung des Reifens (4) eine in der Mitte (M) ausgebildete Absenkung der Stufenfläche gegenüber einem größten Absenkmaß des Profilblocks (9) ausgehend von dem radial und in Richtung der Drehachse (7) am weitesten vorstehenden Bereich etwa einer Hälfte bis zu einem Dreifachen des Absenkmaßes des Profilblocks (9) entspricht.

Desgleichen ist eine mögliche Lösung der Aufgabe bei einem Laufrad gegeben, das mit den vorstehend aufgeführten Merkmalen ausgebildet ist.

Dadurch, dass der Profilblock einen Teil der Reifenaufstandsfläche bildet und im Querschnitt zu der gegenüberliegenden Seitenfläche hin abfällt, ergibt sich ein der Seitenfläche zugeordneter Vorstandsbereich des Profilsblocks, der aufgrund des bei einem Profilblock gegebenen Freistands beim Zusammenwirken mit einem Hindernis wie etwa einer Kante oder Stufe, wenn eine Belastung auf den Profilblock im Wesentlichen in Umfangsrichtung des Reifens erfolgt, eine günstige Verkrallung ermöglicht. Dadurch, dass das Material des Reifens elastisch ist, ergibt sich bei Kontakt eines solchen Profilblocks mit dem Boden aufgrund der üblicherweise wirkenden Last eine Abflachung des Profils und damit eine größere Aufsetzfläche auf den Boden. Dies zugleich ausgehend von dem radial und in Richtung der Drehachse am weitesten vorstehenden Bereich des Reifens, was günstig zur Stabilität des Fahrens insgesamt beitragen kann.

Weitere Merkmale der Erfindung sind nachstehend, auch in der Figurenbeschreibung und der Zeichnung, oftmals in ihrer bevorzugten Zuordnung zu dem bereits vorstehend erläuterten Konzept beschrieben bzw. dargestellt, sie können aber auch in einer Zuordnung zu nur einem oder mehreren einzelnen Merkmalen, die hier beschrieben oder zeichnerisch dargestellt sind, oder unabhängig oder in einem anderen Gesamtkonzept, von Bedeutung sein.

So ist es bevorzugt, dass bezogen auf eine in Richtung der Drehachse gegebene Mitte der Reifenaufstandsfläche der durch den Profilblock gebildete Teil der Reifenaufstandsfläche bis zu der Mitte hin abfällt. Ein - einzelner - Profilblock bildet somit bezogen auf den Querschnitt etwa hälftig die Reifenaufstandsfläche. Dadurch, dass der Abfall bis hin zu der Mitte gegeben ist, ist ein entsprechend variabler Vergrößerungsbereich der tatsächlich mit einem Boden in Berührung stehenden Abschnitte der Reifenaufstandsfläche gegeben. Bevorzugt ist hierbei, dass zufolge der Elastizität des Materials bei einem üblichen Gewicht des Gerätes, an welchem sich das Laufrad befindet, praktisch, jedenfalls bezogen auf den genannten Querschnitt, der gesamte durch einen solchen Profilblock gebildete Teil der Reifenaufstandsfläche auch auf dem Boden aufliegt.

In weiterer Einzelheit ist bevorzugt, dass bezogen auf die genannte Mitte gegenüberliegende Profilblöcke ausgebildet sind. Diese gegenüberliegenden Profilblöcke sind weiter bevorzugt untereinander gleichgestaltet. Insbesondere weisen sie bevorzugt eine gleiche Grundfläche auf. Auch ist darüber hinaus bevorzugt, dass ihre Kontur und/oder ihre Erstreckung in Richtung der Drehachse und/oder in radialer Richtung bezogen auf die Drehachse jeweils gleich sind.

Diese gegenüberliegenden Profilblöcke können in weiterer Einzelheit in Umfangsrichtung versetzt zueinander angeordnet sein. Hierbei kann zunächst eine überlappende Anordnung vorgesehen sein, so dass in einer Seitenansicht, gesehen in Richtung der Drehachse des Rades, einer der beiden Profilblöcke durch den anderen teilweise überdeckt ist. Das Überdeckungsmaß in Umfangsrichtung kann hierbei beispielsweise einem Zehntel bis zwei Drittel der Erstreckung eines Profilblocks in Umfangsrichtung entsprechen. Bevorzugt ist jedoch insoweit, dass die gegenüberliegenden Profilblöcke in Umfangsrichtung derart versetzt sind, dass in der genannten Seitenansicht praktisch beide Profilblöcke sich vollständig mit ihrer diesbezüglichen Fläche abbilden.

Aufgrund der Formung des Reifens aus einem elastischen Material wie etwa einer Gummimischung oder einem thermoplastischem Elastomer und den diesbezüglichen Formungsvorgängen sind geringfügige Maßungenauigkeiten immer gegeben.

Weiter ist bevorzugt, dass ein Profilblock sich im Querschnitt von der jeweiligen Seitenfläche bis zu der Mitte erstreckt. Die Hälfte des Profils wird in dieser Hinsicht, bevorzugt jeweils, von einem Profilblock eingenommen. Zwei gegenüberliegende Profilblöcke bilden gemeinsam im Querschnitt entsprechend die Profillinie. Hierbei ist bevorzugt keine oder praktisch nur eine singuläre Querschnittsfläche gegeben, aufgrund der Versetzung der Profilblöcke in Umfangsrichtung zueinander, in welcher beide gegenüberliegenden Profilblöcke gleichzeitig als Schnittfläche wiedergegeben sind.

Es ist auch bevorzugt, dass ein Profilblock in der Draufsicht einen rechteckigen Grundriss aufweist. Hierbei kann auch eine Gestaltung mit gleichlangen Seiten gegeben sein, also eine in der Draufsicht quadratische Ausbildung eines Profilblocks.

Hinsichtlich einer Seitenfläche ist bevorzugt, dass sie im Querschnitt im Wesentlichen gerade verlaufend ausgebildet ist. Sie verläuft auch ausgehend von dem Übergang in die Reifenaufstandsfläche bevorzugt zu der genannten Mitte hin zulaufend, so dass sich im Querschnitt gesehen von der Drehachse eine nach außen konisch öffnende Kontur des Reifens ergibt. In den Bereichen, in denen jeweils in Umfangsrichtung kein Profilblock ausgebildet ist, ist die Gestaltung bevorzugt derart vorgesehen, dass sich bezogen auf den genannten Querschnitt eine bevorzugt bis zur Mitte reichende Stufenfläche ergibt. Die Stufenfläche ist auch bevorzugt etwa gleichgerichtet zu der Drehachse verlaufend in dem Querschnitt gegeben. Die Vertikalfläche der Stufe ergibt sich entsprechend bevorzugt in der genannten Mitte. Die Vertikalfläche geht bevorzugt radial außen unmittelbar in die durch einen Profilblock gebildete Reifenaufstandsfläche über. Die Absenkung der Stufenfläche gegenüber dem größten Absenkmaß eines Profilblocks ausgehend von dem radial und in Richtung der Drehachse am weitesten vorstehenden Bereich ergibt sich etwa um die Hälfte bis zum Dreifachen dieses Maßes.

Weiter ist bevorzugt, dass ein Profilblock bzw. ein diesbezüglicher Reifenabschnitt, ausgehend von der Seitenfläche unterseitig, der Nabe zugewandt einen Erstreckungsabschnitt aufweist, der einen Freistand zu einem zugeordneten Schulterabschnitt der Nabe aufweist. Dieser Freistand ermöglicht bei entsprechender Belastung ein elastisches Verformen des zugeordneten Reifenabschnitts insgesamt nach radial innen. Dies begünstigt die angesprochene Ausbildung einer größeren Aufstandsfläche wenn im üblichen Verfahrmodus ein entsprechender Abschnitt des Reifens zur Auflage auf den Boden kommt.

Insbesondere ist bevorzugt die Elastizität des Materials so gewählt, dass im Belastungszustand, bei dem genannten üblichen Verfahren bzw. der Auflage der Reifenaufstandsfläche auf den Boden unter Tragen der diesbezüglichen Last des Gerätes, der Erstreckungsabschnitt durch den Schulterabschnitt eine Abstützung erfährt. Der Erstreckungsabschnitt kommt zur Auflage auf der Abstützung. Hierbei kann vorgesehen sein, dass die Ausbildung so getroffen ist, dass der Erstreckungsabschnitt nahezu vollständig zur Auflage kommt. Er kann aber auch bezogen auf eine Abmessung des Erstreckungsabschnittes in Richtung der Drehachse auf einem Zehntel bis etwa acht Zehntel der Abmessung zur Auflage kommen.

Eine Erstreckung des Reifens in Richtung der Drehachse im Bereich der Profilblöcke, insbesondere also ausgehend von einem Erstreckungsabschnitt nach radial außen, beträgt bevorzugt das Zweifache der diesbezüglichen Erstreckung eines Profilblocks. Der Profilblock wächst entsprechend in radialer Richtung etwa bei halbem radialen Maß des Reifens aus diesem im gegebenen Freistand heraus.

Weiter ist bevorzugt, dass der Reifen nabenseitig eine nach radial innen vorstehende Halterungsausformung aufweist. Darüber hinaus bevorzugt ist der Reifen außerhalb eines Zustandes, in welchem ein Erstreckungsabschnitt eine Abstützung auf einem Schulterabschnitt erfährt, auch praktisch nur durch diese Halterungsausformung abgestützt.

Eine Halterungsausformung kann als in Umfangsrichtung verlaufende Rippe ausgebildet sein. Hierbei kann sie in Umfangsrichtung durchgehend oder abschnittsweise vorgesehen sein. Die Halterungsausformung verläuft auch bevorzugt in Radialrichtung, bezogen auf den unbelasteten Zustand, vorstehend gegenüber einem Erstreckungsabschnitt.

Die Halterungsausformung ist weiter bevorzugt in einer durch zwei umlaufende, in Richtung der Drehachse beabstandete Rippen der Nabe gebildete Nut aufgenommen. Die Stirnflächen dieser Rippen können auch noch zur Abstützung des Reifens beitragen, wobei diese Stirnfläche gegebenenfalls an einem diesbezüglichen, vergleichsweise kleinen, Abschnitt einer Erstreckungsfläche anliegen können.

Die vor- und nachstehend angegebenen Bereiche bzw. Wertebereiche oder Mehrfachbereiche schließen hinsichtlich der Offenbarung auch sämtliche Zwischenwerte ein, insbesondere in Ein-Zehntel-Schritten der jeweiligen Dimension, gegebenenfalls also auch dimensionslos, also beispielsweise ein Zehntel einer Länge, Breite etc. oder eines X-fachen. Wenn beispielsweise auf ein Viertel bis drei Viertel einer Länge, Breite oder dergleichen eines anderen Teils Bezug genommen ist, ist desgleichen in die Offenbarung eingeschlossen ein Bereich von 0,275 bis 0,75 oder 0,275 bis 0,725 oder 0,25 bis 0,75 oder 0,3 bis 0,75 etc. Diese Offenbarung dient einerseits zur Eingrenzung der genannten Bereichsgrenzen von unten und/oder oben, wie auch beispielhaft dargelegt, alternativ oder ergänzend aber auch zur Offenbarung eines oder mehrere singulärer Werte aus einem jeweilig angegebenen Bereich.

Nachstehend ist die Erfindung weiter anhand der beigefügten Zeichnung erläutert, die aber lediglich ein Ausführungsbeispiel darstellt. Hierbei zeigt:
- Fig. 1: eine teilweise, im Bereich der Laufräder, aufgebrochene Darstellung eines beispielhaften Boden-Aufsammelgerätes;
- Fig. 2: eine perspektivische Ansicht eines Laufrades;
- Fig. 3: eine Draufsicht auf das Laufrad gemäß Figur 2;
- Fig. 4: einen Querschnitt entlang der Linie IV - IV in Figur 2;
- Fig. 5: eine Seitenansicht des Laufrades im belasteten Zustand;
- Fig. 6: einen Querschnitt durch den Gegenstand gemäß Figur 5, geschnitten entlang der Linie VI - VI;
- Fig. 7: der Gegenstand gemäß Figur 5 in Zusammenwirkung mit einem stufenförmigen Hindernis; und
- Fig. 8: einen Querschnitt durch den Gegenstand gemäß Figur 7, geschnitten entlang der Linie VIII - VIII.

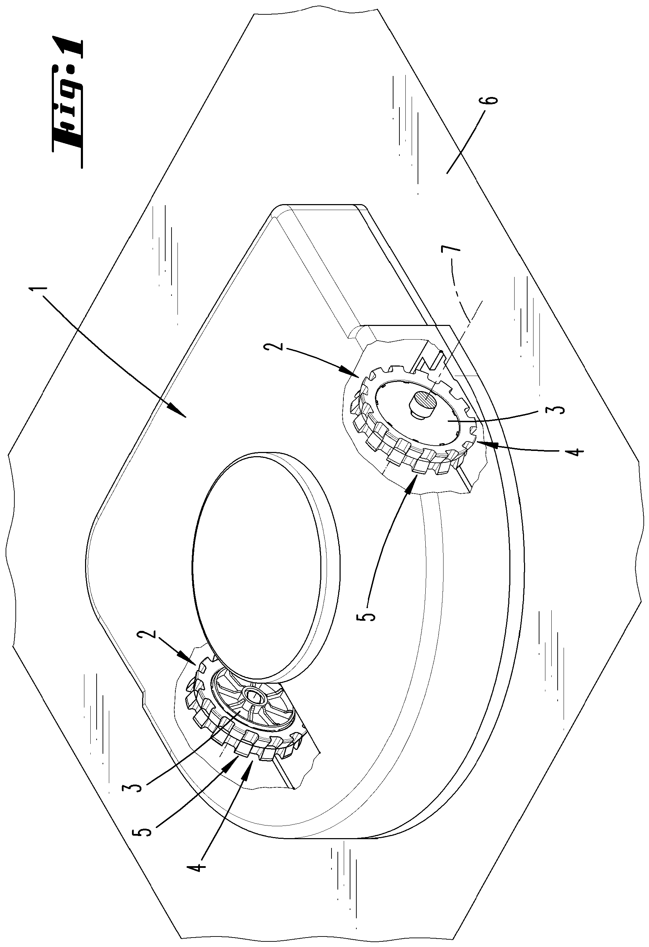

Dargestellt und beschrieben ist, mit Bezug zu Figur 1, ein selbsttätig verfahrbares Bodenstaub-Aufsammelgerät 1, das beim Ausführungsbeispiel über zwei Laufräder 2 verfügt. Eines oder beide der Laufräder 2 können angetrieben sein.

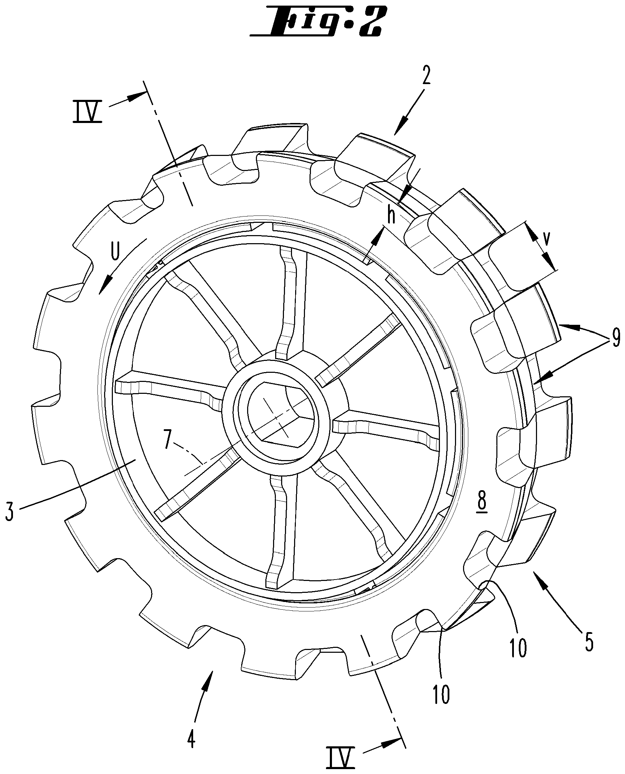

Ein derartiges Laufrad 2, wozu auf die folgenden Figuren 2 bis 8 Bezug genommen ist, weist im Einzelnen eine Nabe 3 und einen Reifen 4 auf. Der Reifen 4 bildet an seinem Umfang eine Reifenaufstandsfläche 5. Die Reifenaufstandsfläche 5 bezeichnet den Teil des Reifens 4, der im Zuge einer Radumdrehung bei üblicher Benutzung, gegebenenfalls ergänzend auch bei die übliche Belastung übersteigender Belastung, mit einem Boden 6 in Berührung kommt. Zentral zu der Nabe 3 weist ein Laufrad 2 weiter eine reale oder geometrische Drehachse 7 auf.

Die Reifenaufstandsfläche 5 geht nach radial innen, gesehen in Richtung der Drehachse 7 in zwei gegenüberliegende Seitenflächen 8 über. Wie für Reifen üblich, besteht dieser aus einem elastischen Material. Es kann sich beispielsweise um Gummi, eine Gummimischung oder ein thermoplastisches Elastomer handeln. Die Reifenaufstandsfläche 5 ist zumindest teilweise durch Profilblöcke 9 gebildet. Die Profilblöcke 9 sind in einer Umfangsrichtung U des Reifens 4 hintereinander vorgesehen. Bei dem dargestellten Ausführungsbeispiel und bevorzugt ist bei üblicher Fahrbeanspruchung und ohne den Sonderfall einer Zusammenwirkung des Reifens mit einem Hindernis die Reifenaufstandsfläche nur durch die Profilblöcke 9, entsprechend deren radial äußere Stirnflächen, gegeben. Die Profilblöcke 9 bilden zusammen mit weiteren in Radialrichtung weisenden Flächen des Reifens, bei dem dargestellten Ausführungsbeispiel sind dies die nachstehend noch beschriebenen Zwischenflächen F, eine Reifenumfangsfläche. Zumindest theoretisch kann praktisch jeder Bereich der Reifenumfangsfläche mit einem Boden bzw. einem Hindernis in Kontakt kommen und so auch Bereiche außerhalb der Stirnflächen der Profilblöcke 9 zumindest temporär Teil der Reifenaufstandsfläche 5 werden.

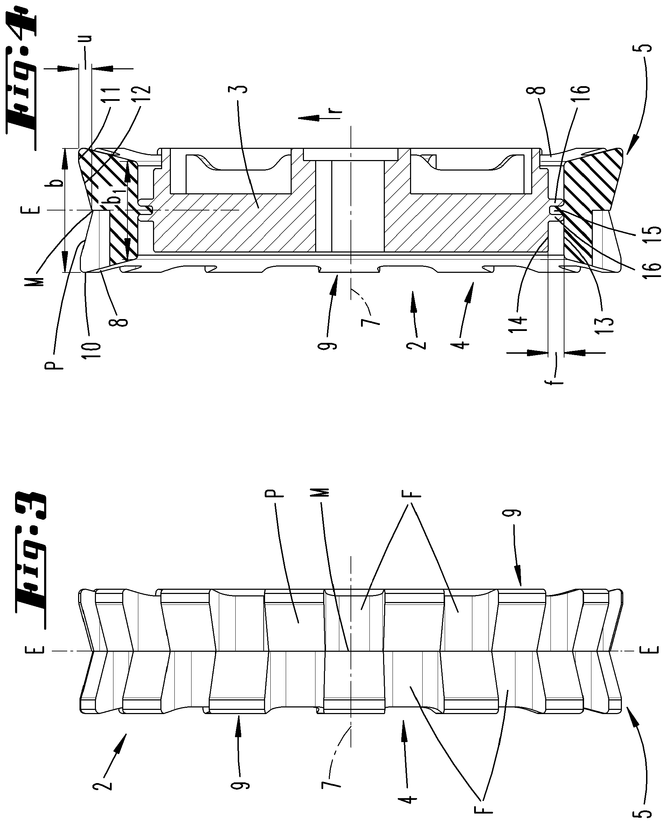

Der durch einen Profilblock 9 gebildete Teil der Reifenaufstandsfläche 5 weist im Querschnitt, siehe etwa Figur 4, ein zur Mitte des Reifens 4 abfallendes Profil auf. Die Mitte des Reifens 4 ist in dieser Hinsicht durch eine senkrecht zur Drehachse 7 verlaufende Ebene E gegeben, die mittig bezogen auf eine größte Breite b des Reifens, wie sie sich in dem Querschnitt gemäß Figur 4 ergibt, verläuft. Ein Profilblock 9 bildet zugleich einen Teil einer zugeordneten Seitenfläche 8. An dem Übergang des einen Teil der Reifenaufstandsfläche 5 bildenden Bereiches eines Profilblockes 9 in eine Seitenfläche 8 bildet dieser Profilblock 9 radial, in einer Radiusrichtung r ausgehend von der Drehachse 7, und in Richtung der Drehachse 7, einen am weitesten vorstehenden Bereich der Reifenaufstandsfläche 5. Konkreter betrachtet ist eine freikragende Profilecke 10 durch einen solchen Profilblock 9 gebildet.

Bezogen auf die genannte Mitte M sind in dem Reifen 4 gegenüberliegende Profilblöcke 9 ausgebildet. Insbesondere und bevorzugt sind auch auf beiden Seiten der Mitte M, in einer Querschnittsbetrachtung, nur jeweils ein Profilblock 9 ausgebildet.

Diese gegenüberliegenden Profilblöcke 9, unabhängig davon, ob jeweils nur einer ausgebildet ist, sind weiter bevorzugt in Umfangsrichtung U des Reifens 4 versetzt zueinander angeordnet. Ein Versetztmaß v, betrachtet in Umfangsrichtung U, entspricht beim Ausführungsbeispiel einer in dieser Richtung betrachteten Länge eines Profilblockes 9. Es kann aber auch kleiner sein, etwa nur einem Zehntel bis neun Zehntel dieser Länge des Profilblockes 9 entsprechen. Bezogen insbesondere auf eine Ausführungsform, bei welcher ausgehend von der Mitte in Bezug auf eine Querschnittsbetrachtung gegenüberliegend nur zwei Profilblöcke 9 vorgesehen sind, erstreckt sich ein Profilblock 9 auch bevorzugt in diesem Querschnitt von der jeweiligen Seitenfläche 8 bis zu der Mitte M.

Eine freistehende Höhe h eines Profilblockes 9, welche dem Abstand von einer in Umfangsrichtung U zwischen zwei bezogen auf die Mitte M gleichen, d. h. insbesondere auf derselben Seite der Mitte befindlichen Profilblöcke 9 abgesenkten Zwischenfläche F bis hin zu dem jeweiligen Punkt der Reifenaufstandsfläche 5 im unbelasteten Zustand entspricht, entspricht bezogen auf die Profilecke 10 bevorzugt einem Zehntel bis neun Zehntel, weiter bevorzugt etwa zwei bis vier Zehntel der Breite b des Reifens 4.

Ein Profilblock 9 kann insbesondere weiter in einer Draufsicht, siehe etwa Figur 3, einen rechteckigen Querschnitt aufweisen. Bevorzugt ist der Querschnitt auch, zumindest annähernd, quadratisch.

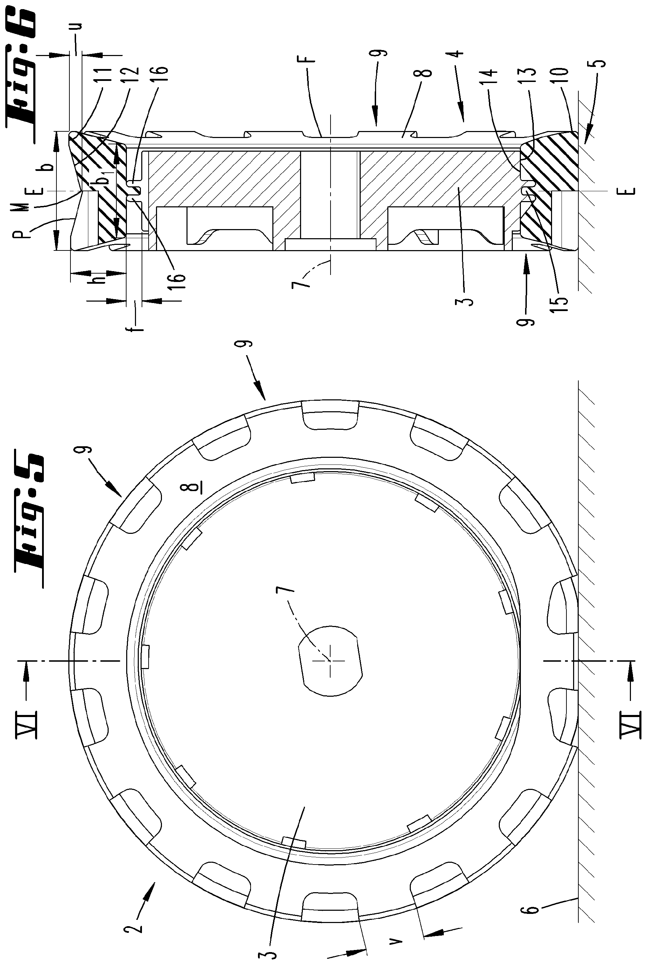

Das Profil P der Reifenaufstandsfläche 5 weist ausgehend von einem Übergang in eine Seitenfläche 8, vergleiche auch hierzu etwa wieder Figur 6, zunächst eine bevorzugt gerade oder nur mit einem geringen Abfall zur Mitte M, gegebenenfalls auch leicht ansteigend zu der Mitte M verlaufenden Außenabschnitt 11 auf. Der Außenabschnitt 11 geht dann in einen Anschlussabschnitt 12 über, der, bevorzugt im Sinne einer Geraden, zu der Mitte M hin abfällt. Ausgehend von der Mitte M ergibt sich daher nach außen hin eine Überhöhung u des Profils P, die etwa einem Viertel bis drei Viertel, bevorzugt ca. ein Drittel, der Höhe h eines Profilblocks im Bereich der Profilecke 10 entspricht.

Eine Seitenfläche 8 des Reifens 4 weist zwei voneinander zu unterscheidende Bereiche auf. Ausgehend von radial innen, von einem Beginn (hier gegeben durch den weiter unten erläuterten Erstreckungsabschnitt 13) des Reifens 4, bis zu einer Umfangsebene, welche durch die Zwischenfläche F gebildet ist, ergibt sich zunächst ein in einer Seitenansicht umfangsmäßig unbeeinflusst durchlaufendes Flächenband. Darüber hinaus in Umfangsrichtung ist eine Seitenfläche 8 jeweils durch einen Profilblock 9 geformt, so dass sich zinnenartige Absätze ergeben.

Bezogen auf einen Querschnitt ist eine Seitenfläche 8 bevorzugt im Wesentlichen gerade verlaufend ausgebildet.

Die Nabe 3 ist bezogen auf die Breite b bevorzugt nur mit einem kleineren Flächenanteil des Reifens 4 in Kontakt. Dies jedenfalls bezogen auf einen unbelasteten Zustand. Wie sich aus Figur 4 beispielsweise ergibt, ist bezogen auf die der Nabe 3 unmittelbar zugewandte Breite bi des Reifens 4 der Kontakte zu der Nabe 3 in Breitenrichtung nur etwa ein bis drei Zehntel der Breite bi. Bevorzugt ist jedenfalls, dass der Kontakt nur auf etwa ein bis drei Viertel der Breite b₁ insoweit gegeben ist.

Hierdurch ergeben sich ein- oder beidseitig, bezogen auf die Mitte M, ein Erstreckungsabschnitt 13 des Reifens 4, der zu einem zugeordneten Schulterabschnitt 14 der Nabe 3 einen Freistand f aufweist. Dieser Freistand f ergibt sich in Richtung der Drehachse gesehen und bezogen auf einen Querschnitt, wie er in Figur 4 beispielsweise auch wiedergegeben ist.

Bevorzugt ist die Größe des Freistandes f, also das freie radiale Maß, das sich hierdurch zwischen dem Schulterabschnitt 14 und dem Erstreckungsabschnitt 13 des Laufrades ergibt, so gewählt, dass bei einem üblichen Verfahren des Gerätes, der Erstreckungsabschnitt durch den Schulterabschnitt eine Abstützung erfährt. Dies ist beispielsweise in Figur 6, unten, zu erkennen.

In weiterer Einzelheit weist der Reifen 4 zur Halterung an der Nabe 3 bevorzugt nabenseitig eine nach radial innen vorstehende Halterungsausformung 15 auf. Diese Halterungsausformung ist in weiterer bevorzugter Ausführungsform als eine in Umfangsrichtung U sich erstreckende Rippe ausgebildet. Hierbei kann die Halterungsausformung 15 mit Unterbrechungen vorgesehen sein. Gegenüber dem Erstreckungsabschnitt 13 ist die Halterungsausformung 15 nach radial innen vorstehend verlaufend geformt. An der Nabe 3 ist diesbezüglich eine Halterungsaufnahme ausgebildet. Bevorzugt ist diese durch zwei umlaufende, ebenfalls rippenartige Vorsprünge 16 gebildet. Die rippenartigen Vorsprünge 16 bilden zwischen sich eine Nut aus, die in ihrer Abmessung der freien Abmessung einer Halterungsausformung 15 entsprechen kann. Auch die Vorsprünge 16 können in Umfangsrichtung unterbrochen verlaufend ausgebildet sein. Auch kann ein Vorsprung 16 abwechselnd bezogen auf die Seitenflächen der Halterungsausformung 15 über den Umfang gesehen vorgesehen sein, so dass in einem bestimmten Querschnitt, mit Ausnahme einer etwaigen Überlappung in Umfangsrichtung immer nur ein Vorsprung 16 sich abbildet.

Bezogen auf den Gegenstand eines Laufrades 2 als solches sind ersichtlich vorstehende Ausführungen in gleicher Weise von Bedeutung, nur dass hier die weiteren ein Bodenreinigungsgerät, insbesondere einen selbsttätig verfahrbares Bodenreinigungsgerät, betreffenden Merkmale nicht gegeben sind.

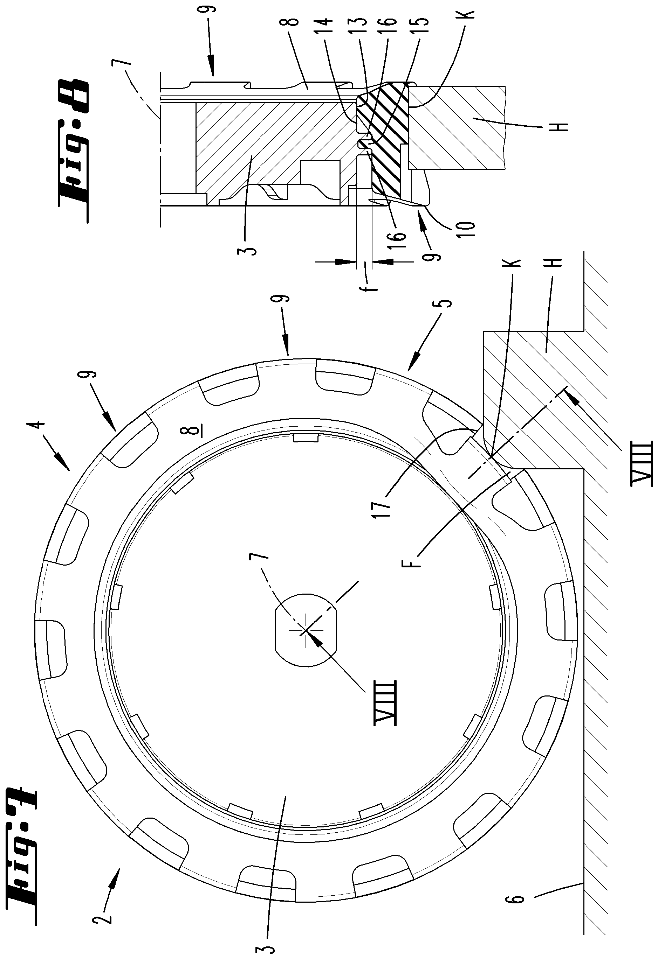

Mit Bezug zu den Figuren 7 und 8 ist die Wirkungsweise des Laufrades 2 weiter erläutert.

Bei einem Auffahren auf ein stufenartiges Hindernis H mit einem im Verhältnis zu dem Laufrad 2 kleinen Kantenradius kommt bei der in den Figuren 7 und 8 dargestellten Konstellation nur ein Profilblock 9 in Eingriff mit der Kante K des Hindernisses H. Aufgrund der Weichheit des Profilblockes 9 wird dieser nach radial innen gequetscht, wie sich dies aus Figur 8 ergibt. Die Kante K fährt in den Zwischenraum zwischen zwei Profilblöcken 9 ein, etwa bis auf die Fläche F. Hierdurch ergibt sich gleichsam eine Verzahnungssituation des Reifen 4 in Bezug auf die Kante K. Eine in Umfangsrichtung U weisende Stirnfläche 17 eines Profilblockes 9 greift über die Kante K über. Da in Umfangsrichtung U die Beanspruchung unterschiedlich ist zu einer zentral nach radial innen wirkenden Beanspruchung, kommt hier die Weichheit bzw. Elastizität des Materials nicht in gleicher Weise zur Wirkung. Es ergibt sich entsprechend gleichsam ein Verzahnungseingriff, der es dem Laufrad 2 ermöglicht, sich an der Kante K zu verkrallen und so das Bodenstaub-Aufsammelgerät 1, an welchem das Laufrad 2 gegebenenfalls angebracht ist, insgesamt anzuheben. Darüber hinaus kann es zu einem Auswölben des Reifens und insbesondere des betroffenen Profilblockes 9 bezogen auf die Seitenfläche 8 insbesondere des betroffenen Profilblockes 9 kommen, wie auch in Figur 8 dargestellt. Eine gewisse Auswölbung in dieser Hinsicht ergibt sich auch bei üblichem Fahrbetrieb, siehe Figur 6.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildungen des Standes der Technik, insbesondere um auf Basis dieser Ansprüche Teilanmeldungen vorzunehmen.

**Bezugszeichenliste**

| | | | |
|---|---|---|---|
| 1 | Bodenstaub-Aufsammelgerät | b | Breite |
| 2 | Laufrad | b₁ | Breite |
| 3 | Nabe | E | Ebene |
| 4 | Reifen | F | Fläche |
| 5 | Reifenaufstandsfläche | f | Freistand |
| 6 | Boden | F | Zwischenfläche |
| 7 | Drehachse | H | Hindernis |
| 8 | Seitenfläche | h | Höhe |
| 9 | Profilblock | K | Kante |
| 10 | Profilecke | M | Mitte |
| 11 | Außenabschnitt | P | Profil |
| 12 | Anschlussabschnitt | r | Radiusrichtung |
| 13 | Erstreckungsabschnitt | U | Umfangsrichtung |
| 14 | Schulterabschnitt | u | Überhöhung |
| 15 | Halterungsausformung | v | Versetztmaß |
| 16 | Vorsprung | | |
| 17 | Stirnfläche | | |

## Patentansprüche

1. Selbsttätig verfahrbares Bodenstaub-Aufsammelgerät (1) mit mindestens einem Laufrad (2), **dadurch gekennzeichnet, dass** das Laufrad (2) eine Drehachse (7), eine Nabe (3) und einen eine Reifenaufstandsfläche (5) ausbildenden Reifen (4) aufweist, wobei die Reifenaufstandsfläche (5) nach radial innen in zwei gegenüberliegende Seitenflächen (8) übergeht und der aus elastischem Material bestehende Reifen (4) jeweils einen Teil der Reifenaufstandsfläche (5) bildende Profilblöcke (9) aufweist, die in Umfangsrichtung (U) hintereinander vorgesehen sind, wobei der durch einen Profilblock (9) gebildete Teil der Reifenaufstandsfläche (5) im Querschnitt ein zur Mitte (M) hin abfallendes Profil (P) aufweist, wobei dieser Profilblock (9) zugleich einen Teil einer zugeordneten Seitenfläche (8) bildet und an diesem Übergang radial und in Richtung der Drehachse (7) einen am weitesten vorstehenden Bereich der Reifenaufstandsfläche (5) des Reifens (4) bildet, wobei der Profilblock (9) in eine Stufenfläche übergeht, und wobei bezogen auf eine radiale Richtung des Reifens (4) eine in der Mitte (M) ausgebildete Absenkung der Stufenfläche gegenüber einem größten Absenkmaß des Profilblocks (9) ausgehend von dem radial und in Richtung der Drehachse (7) am weitesten vorstehenden Bereich etwa einer Hälfte bis zu einem Dreifachen des Absenkmaßes des Profilblocks (9) entspricht.

2. Bodenstaub-Aufsammelgerät (1) nach Anspruch 1, **dadurch gekennzeichnet, dass** bezogen auf eine in Richtung der Drehachse (7) gegebene Mitte (M) des Reifens (4) gegenüberliegende Profilblöcke (9) ausgebildet sind, wobei, bevorzugt, die gegenüberliegenden Profilblöcke (9) in Umfangsrichtung (U) versetzt zueinander angeordnet sind, wobei, weiter bevorzugt, ein Versetztmaß (v) einer Erstreckung eines Profilblocks (9) in Umfangsrichtung (U) entspricht.

3. Bodenstaub-Aufsammelgerät (1) nach einem oder mehreren der vorhergehenden Ansprüche, **dadurch gekennzeichnet, dass** ein Profilblock (9) sich im Querschnitt von der jeweiligen Seitenfläche (8) bis zur Mitte (M) erstreckt und/oder, dass ein Profilblock (9) in der Draufsicht einen rechteckigen Grundriss aufweist und/oder, dass eine Seitenfläche (8) im Querschnitt im Wesentlichen gerade verlaufend ausgebildet ist.

4. Bodenstaub-Aufsammelgerät (1) nach einem oder mehreren der vorhergehenden Ansprüche, **dadurch gekennzeichnet, dass** ein Profilblock (9) bzw. ein diesbezüglicher Reifenabschnitt in Richtung der Drehachse (7) und bezogen auf einen Querschnitt einen Erstreckungsabschnitt (12) aufweist, der einen Freistand (f) zu einem zugeordneten Schulterabschnitt (13) der Nabe (3) aufweist.

5. Bodenstaub-Aufsammelgerät (1) nach einem oder mehreren der vorhergehenden Ansprüche, **dadurch gekennzeichnet, dass** die Elastizität des Materials so gewählt ist, dass im Belastungszustand, wenn bei einem üblichen Verfahren des Gerätes der durch den Profilblock (9) gebildete Teil der Reifenaufstandsfläche (5) auf dem Boden (6) aufliegt, der Erstreckungsabschnitt (12) durch den Schulterabschnitt (13) eine Abstützung erfährt.

6. Bodenstaub-Aufsammelgerät (1) nach einem oder mehreren der vorhergehenden Ansprüche, **dadurch gekennzeichnet, dass** eine Erstreckung des Reifens (4) in Richtung der Drehachse (7) im Bereich der Profilblöcke (9) durch das Zweifache der diesbezüglichen Erstreckung eines Profilblocks (9) bestimmt ist.

7. Bodenstaub-Aufsammelgerät (1) nach einem oder mehreren der vorhergehenden Ansprüche, **dadurch gekennzeichnet, dass** der Reifen (4) nabenseitig eine nach radial innen vorstehende Halterungsausformung (14) aufweist, wobei, bevorzugt die Halterungsausformung (14) als in Umfangsrichtung (U) verlaufende Rippe ausgebildet ist.

8. Bodenstaub-Aufsammelgerät (1) nach einem oder mehreren der vorhergehenden Ansprüche, **dadurch gekennzeichnet, dass** eine Halterungsausformung (14) gegenüber einem Erstreckungsabschnitt (12) radial nach innen vorstehend verläuft.

9. Bodenstaub-Aufsammelgerät (1) nach einem oder mehreren der vorhergehenden Ansprüche, **dadurch gekennzeichnet, dass** an der Nabe (3) eine Halterungsaufnahme ausgebildet ist, die durch zwei umlaufende, in Richtung der Drehachse (7) beabstandete Vorsprünge (15) gebildete Nut bestimmt ist.

10. Laufrad (2) mit einem Bodenstaub-Aufsammelgerät (1) nach einem der vorstehenden Ansprüche.

## Claims

1. Self-propelling floor dust collecting device (1) comprising at least one wheel (2), **characterised in that** the wheel (2) has an axis of rotation (7), a hub (3) and a tyre (4) forming a tyre contact patch (5), wherein the tyre contact patch (5) transitions radially inwardly into two opposite lateral faces (8) and the tyre (4), which consists of elastic material, has tread blocks (9) which each form part of the tyre contact patch (5) and are provided behind one another in the circumferential direction (U), wherein the part of the tyre contact patch (5) formed by a tread block (9) has, in cross section, a tread (P) which slopes downwards towards the centre (M), wherein said tread block (9) simultaneously forms part of an associated lateral face (8) and, radially and in the direction of the axis of rotation (7), forms a farthest protruding region of the tyre contact patch (5) of the tyre (4) at said transition, wherein the tread block (9) transitions into a step surface, and wherein, with respect to a radial direction of the tyre (4), a lowering of the step surface, formed in the centre (M), relative to a greatest lowering dimension of the tread block (9), starting from the region which protrudes farthest radially and in the direction of the axis of rotation (7), corresponds to approximately one half to three times the lowering dimension of the tread block (9).

2. Floor dust collecting device (1) according to claim 1, **characterised in that** tread blocks (9) are formed which are opposite with respect to a centre (M) of the tyre (4) given in the direction of the axis of rotation (7), the opposite tread blocks (9) preferably being arranged offset from one another in the circumferential direction (U), an offset dimension (v) more preferably corresponding to an extension of a tread block (9) in the circumferential direction (U).

3. Floor dust collecting device (1) according to one or more of the preceding claims, **characterised in that** a tread block (9) extends in cross section from the relevant lateral face (8) to the centre (M) and/or **in that** a tread block (9) has a rectangular outline in plan view and/or **in that** a lateral face (8) is designed to extend in a substantially straight manner in cross section.

4. Floor dust collecting device (1) according to one or more of the preceding claims, **characterised in that** a tread block (9) or a corresponding tyre portion has an extension portion (12) in the direction of the axis of rotation (7) and with respect to a cross section, which extension portion has a clearance (f) from an associated shoulder portion (13) of the hub (3).

5. Floor dust collecting device (1) according to one or more of the preceding claims, **characterised in that** the elasticity of the material is selected such that, in the loaded state, when the part of the tyre contact patch (5) formed by the tread block (9) rests on the floor (6) during a conventional process of the device, the extension portion (12) is supported by the shoulder portion (13).

6. Floor dust collecting device (1) according to one or more of the preceding claims, **characterised in that** an extension of the tyre (4) in the direction of the axis of rotation (7) in the region of the tread blocks (9) is determined by twice the relevant extension of a tread block (9).

7. Floor dust collecting device (1) according to one or more of the preceding claims, **characterised in that** the tyre (4) has a radially inwardly protruding mounting formation (14) on the hub side, the mounting formation (14) preferably being formed as a rib extending in the circumferential direction (U).

8. Floor dust collecting device (1) according to one or more of the preceding claims, **characterised in that** a mounting formation (14) protrudes radially inwardly relative to an extension portion (12).

9. Floor dust collecting device (1) according to one or more of the preceding claims, **characterised in that** a mounting receptacle is formed on the hub (3), which mounting receptacle is provided by a groove formed by two circumferential projections (15) spaced apart in the direction of the axis of rotation (7).

10. Wheel (2) comprising a floor dust collecting device (1) according to any of the preceding claims.

## Revendications

1. Dispositif de collecte de poussière de sol (1) à déplacement automatique, avec au moins une roue de roulement (2), **caractérisé en ce que** la roue de roulement (2) présente un axe de rotation (7), un moyeu (3) et un pneu (4) formant une surface de contact de pneu (5), dans lequel la surface de contact de pneu (5) se poursuit radialement vers l'intérieur en deux surfaces latérales opposées (8) et le pneu (4) qui est réalisé en matériau élastique, présente des blocs profilés (9) formant chacun une partie de la surface de contact de pneu (5) et prévus l'un derrière l'autre dans la direction circonférentielle (U), dans lequel la partie de la surface de contact de pneu (5) formée par un bloc profilé (9) présente en section transversale un profil (P) qui descend vers le milieu (M), dans lequel ce bloc profilé (9) forme en même temps une partie d'une surface latérale (8) associée et forme à cette transition radialement et dans la direction de l'axe de rotation (7) une région de la surface de contact de pneu (5) du pneu (4) qui est la plus saillante, dans lequel le bloc profilé (9) se poursuit en une surface étagée et dans lequel, par rapport à une direction radiale du pneu (4), un abaissement de la surface étagée formée au milieu (M) par rapport à une dimension d'abaissement la plus grande du bloc profilé (9), en partant de la région la plus saillante radialement et dans la direction de l'axe de rotation (7), correspond à environ une moitié à trois fois la dimension d'abaissement du bloc profilé (9).

2. Dispositif de collecte de poussière de sol (1) selon la revendication 1, **caractérisé en ce que** des blocs profilés (9) opposés sont formés par rapport à un milieu (M) du pneu (4) donné dans la direction de l'axe de rotation (7), dans lequel, de préférence, les blocs profilés (9) opposés sont agencés de manière décalée les uns par rapport aux autres dans la direction circonférentielle (U), dans lequel, de manière encore plus préférée, une dimension de décalage (v) correspond à une extension d'un bloc profilé (9) dans la direction circonférentielle (U).

3. Dispositif de collecte de poussière de sol (1) selon une ou plusieurs des revendications précédentes, **caractérisé en ce qu'**un bloc profilé (9) s'étend en section transversale depuis la surface latérale respective (8) jusqu'au milieu (M) et/ou **en ce qu'**un bloc profilé (9) présente un contour de base rectangulaire en vue de dessus et/ou **en ce qu'**une surface latérale (8) est formée de manière à s'étendre de façon sensiblement rectiligne en section transversale.

4. Dispositif de collecte de poussière de sol (1) selon une ou plusieurs des revendications précédentes, **caractérisé en ce qu'**un bloc profilé (9) ou une partie de pneu s'y rapportant présente, dans la direction de l'axe de rotation (7) et par rapport à une section transversale, une partie d'extension (12) qui présente un jeu (f) par rapport à une partie d'épaulement associée (13) du moyeu (3).

5. Dispositif de collecte de poussière de sol (1) selon une ou plusieurs des revendications précédentes, **caractérisé en ce que** l'élasticité du matériau est choisie de manière que, à l'état chargé, la partie d'extension (12) arrive en appui sur la partie d'épaulement (13) lorsque la partie de surface de contact de pneu (5) formée par le bloc profilé (9) repose sur le sol (6) lors d'un déplacement habituel du dispositif.

6. Dispositif de collecte de poussière de sol (1) selon une ou plusieurs des revendications précédentes, **caractérisé en ce qu'**une extension du pneu (4) dans la direction de l'axe de rotation (7) dans la région des blocs profilés (9) est déterminée par le double de l'extension s'y rapportant d'un bloc profilé (9).

7. Dispositif de collecte de poussière de sol (1) selon une ou plusieurs des revendications précédentes, **caractérisé en ce que** le pneu (4) présente du côté du moyeu une formation de maintien (14) faisant saillie radialement vers l'intérieur, dans lequel, de préférence, la formation de maintien (14) est formée en tant que nervure s'étendant dans la direction circonférentielle (U).

8. Dispositif de collecte de poussière de sol (1) selon une ou plusieurs des revendications précédentes, **caractérisé en ce qu'**une formation de maintien (14) s'étend en saillie radialement vers l'intérieur par rapport à une partie d'extension (12).

9. Dispositif de collecte de poussière de sol (1) selon une ou plusieurs des revendications précédentes, **caractérisé en ce qu'**un évidement de maintien est formé sur le moyeu (3) qui est définie par une rainure formée par deux saillies circonférentielles (15) espacées dans la direction de l'axe de rotation (7).

10. Roue de roulement (2) avec un dispositif de collecte de poussière de sol (1) selon l'une des revendications précédentes.
